# EUROPEAN PATENT SPECIFICATION

(11) **EP 3 079 440 B1**
(45) Date of publication and mention of the grant of the patent: **07.11.2018**
(21) Application number: 14866991.4
(22) Date of filing: 02.12.2014
(51) Int. Cl.: G01S 3/803, G01S 5/02, G01S 5/18, G01S 5/28, H04W 48/16, H04W 4/00, G01S 15/46, H04W 84/18

(54) **APPARATUS EQUIPPED WITH PROXIMITY SYNCHRONIZATION MECHANISM AND METHOD FOR OPERATING SAME**
MIT NÄHERUNGSSYNCHRONISIERUNGSMECHANISMUS AUSGESTATTETE VORRICHTUNG UND VERFAHREN ZUM BETRIEB DIESER
APPAREIL ÉQUIPÉ D'UN MÉCANISME DE SYNCHRONISATION DE PROXIMITÉ ET PROCÉDÉ DE MISE EN OEUVRE DE CELUI-CI

(30) Priority: 06.12.2013 US 201314099013; 15.10.2014 KR 20140139070
(43) Date of publication of application: 12.10.2016
(73) Proprietor: Samsung Electronics Co., Ltd., Gyeonggi-do 16677 (KR)
(72) Inventor: GOEL, Mayank, Seattle, Washington 98105 (US); HIBINO, Stacie, San Jose, California 95117 (US)
(74) Representative: HGF Limited
(86) International application number: PCT/KR2014/011660
(87) International publication number: WO 2015/084010

(56) References cited:
- KR-A- 20040 074 702
- KR-A- 20100 111 346
- KR-A- 20120 006 900
- KR-A- 20130 018 364
- KR-B1- 101 046 697
- US-A1- 2007 010 200
- US-A1- 2012 127 831
- TOSHIHARU HORIUCHI ET AL: "Acoustic-based passive pointing system for distant screens", 2012 IEEE INTERNATIONAL CONFERENCE ON ACOUSTICS, SPEECH AND SIGNAL PROCESSING (ICASSP 2012) : KYOTO, JAPAN, 25 - 30 MARCH 2012 ; [PROCEEDINGS], IEEE, PISCATAWAY, NJ, 25 March 2012 (2012-03-25), pages 1689-1692, XP032227462, DOI: 10.1109/ICASSP.2012.6288222 ISBN: 978-1-4673-0045-2

## Description

### TECHNICAL FIELD

Embodiments of the present invention relates to a mobile device for use in a device communication system and a method of operating a mobile device in a device communication system.

### BACKGROUND ART

Modern consumer and industrial electronics, especially devices such as graphical display systems, TVs, projectors, cellular phones, portable digital assistants, and combination devices, are providing increasing levels of functionality to support modern life. The enhancement of the features of these electronic devices has created overlaps in function that can have convenient effects.

Intelligent TV sets have become a household centerpiece. Laptop computers and smartphones, for example, can interact with the TV, for displaying photographs or playing videos, by physical cabling between the intelligent TV and the laptop or smartphone. In the alternative, any device that can reside on a network with the intelligent TV can access it through a network router. These connections are difficult for some users to comprehend.

Smartphones may take photographs and videos, but they may not be very good viewing platforms because of the size of the display. Most smartphones could e-mail the photos or videos, but that transmission can tie-up the smartphone for a long duration and in some cases system firewalls and protection software may block the delivery of such files due to the concern about computer viruses or malware. As a result, most users wait until they can dock their smartphones by linking them to their home computer. As the urgency of the moment passes, many of the files generated by the smartphones do not get stored or transferred to a reasonable transport or display device.

Thus, a need still remains for a proximity synchronization mechanism to allow access to overlapping resources of multiple devices proximate to each other. In view of the ever-increasing commercial competitive pressures, along with growing consumer expectations and the diminishing opportunities for meaning product differentiation in the marketplace, it is increasingly critical that answers be found to these problems.

Solutions to these problems have been long sought but prior developments have not taught or suggested any solutions. Thus, solutions to these problems have long eluded those skilled in the art.

United States Patent Application Publication No. US 2005/240680 appears to disclose methods and systems for determining and utilizing spatial correlative information relating to two or more devices to determine device positioning.

Acoustic-based passive pointing system for distant screens" from Toshiharu Horiuchi et al, 2012 IEEE International Conference on Acoustics, Speech and Signal Processing (ICASSP 2012), Kyoto, Japan, 25-30 March 2012, 25 March 2012, pages 1689-1692, appears to disclose a passive pointing system for a distant screen based on an acoustic position estimation technology in conjunction with a gravity sensor on a smartphone.

United States Patent Application Publication No. US 2007/010200 appears to disclose a wireless communication device having a sonic wave transmission unit that transmits a sonic wave for detecting a position of another wireless communication device so as to facilitate short-range wireless communication between the devices.

### DETAILED DESCRIPTION OF THE INVENTION

### TECHNICAL PROBLEM

The invention is set out in the appended set of claims. The embodiments and/or examples of the following description which are not covered by the appended claims are considered as not being part of the present invention.

### DESCRIPTION OF THE DRAWINGS

FIG. 1 is a device communication system with a proximity synchronization mechanism, according to an embodiment of the present invention.
FIG. 2 is an example of the device communication system of FIG. 1, according to an embodiment of the present invention.
FIG. 3 is an exemplary block diagram of the device communication system.
FIG. 4 is a control flow of the device communication system of FIG. 1.
FIG. 5 is a flowchart of a method of operating the device communication system according to an embodiment of the present invention.

### BEST MODE

A mobile device communication system according to an embodiment includes: a communication interface configured to transmit and wireless signals; a control interface coupled to the communication interface and configured: to control the communication interface to send a proximate resource request to a server device to trigger the transmission of a wireless activation command from the server device to the wireless enabled device; and to measure the wireless signal strength of a wireless signal provided by the wireless enabled device; a user interface coupled to the control interface and configured to analyze a left acoustic signal and a right acoustic signal provided by the wireless enabled device, to determine an acoustic direction; and a controller coupled to the user interface and configured to form a peer-to-peer network connection based on the wireless signal strength and the acoustic direction.

A method performed by a mobile a device communication system according to an embodiment includes: sending a proximate resource request to a server device to trigger the transmission of a wireless activation command from the server device to a wireless enabled device; measuring a wireless signal strength of a wireless signal provided by the wireless enabled device; analyzing a left acoustic signal and a right acoustic signal from the wireless enabled device to determine an acoustic direction of the wireless enabled device; and forming a peer-to-peer network connection based on the wireless signal strength and the acoustic direction.

### MODE OF THE INVENTION

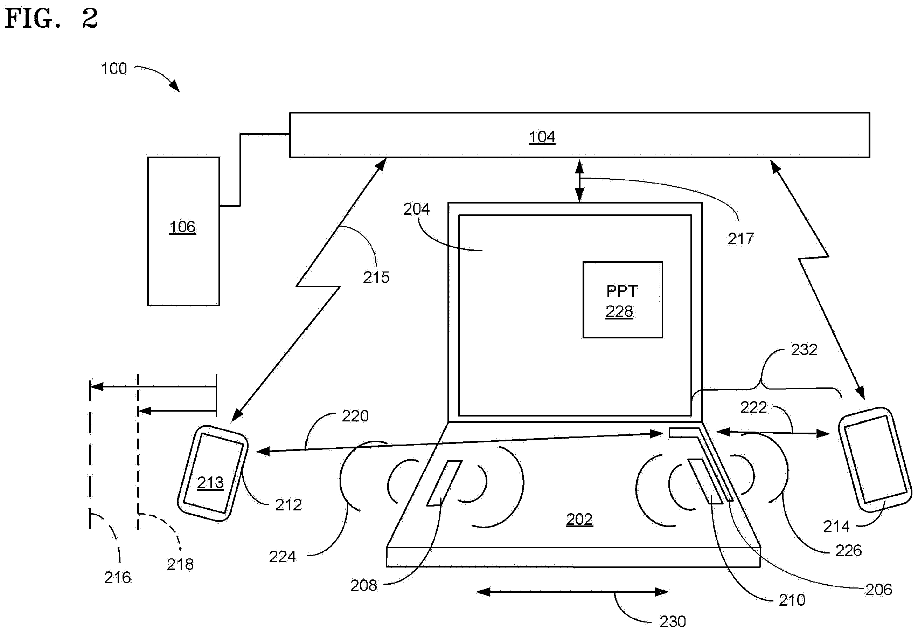

An embodiment of the present invention provides a device communication system that is capable of accurately determining a distance and an acoustic direction from a wireless enabled device to a first mobile device by combining the interpretation of an amplitude of a first wireless signal with an amplitude comparison of a left acoustic signal and a right acoustic signal so as to automatically establish a peer-to-peer network connection through the first wireless signal. The calculation of the distance and the acoustic direction may be used to make any interaction between the wireless enabled device and the first mobile device more intuitive. For example, when the first mobile device is located to a left side of the wireless enabled device as shown in FIG. 2, a selected file may be copied from the first mobile device to the wireless enabled device by a motion from a left side to a right side on a touch screen of the first mobile device.

An embodiment of the present invention provides a device communication system that automatically forms the peer-to-peer network connection through the first wireless signal by putting the first mobile device within a second radius from the wireless enabled device. Once the peer-to-peer network connection is formed between the first mobile device and the wireless enabled device, an application operating on the first mobile device may be configured to automatically transfer an application file from the first mobile device to the wireless enabled device for displaying on a display screen. In this configuration, no intervention is required to move the application file from the first mobile device to the wireless enabled device. Also, even if the application file is closed from the wireless enabled device, an updated copy of the application file may be transferred back to the first mobile device.

An embodiment of the present invention provides a device communication system that provides a secure access mechanism for the wireless enabled device that is electronically locked as in a sleep mode. The placing of the first mobile device within a second radius from the wireless enabled device may provide a password necessary to unlock the wireless enabled device without requiring any intervention. The peer-to-peer network connection may pass an encrypted password key from the first mobile device to the wireless enabled device in order to automatically allow the operations of the wireless enabled device to proceed.

The following embodiments are described in sufficient detail to enable those skilled in the art to make and use the present invention. It is to be understood that other embodiments would be evident based on the present disclosure, and that system, process, or mechanical changes may be made without departing from the scope of an embodiment of the present invention.

In the following description, numerous specific details are given to provide a thorough understanding of the present invention. However, it will be apparent that the invention may be practiced without these specific details. In order to avoid obscuring an embodiment of the present invention, some well-known circuits, system configurations, and process steps are not disclosed in detail.

The drawings showing embodiments of the system are semi-diagrammatic and not to scale. In particular, some of the dimensions are for the clarity of description and are exaggerated in the drawings. Similarly, although the views in the drawings for convenience of description generally show similar orientations, this depiction in the figures is arbitrary for the most part. In general, the present invention may be operated in any orientation. The embodiments have been numbered a first embodiment, a second embodiment, etc. as a matter of descriptive convenience and are not intended to have any other significance or provide limitations for an embodiment of the present invention.

The term "module" referred to herein may include software, hardware, or a combination thereof in an embodiment of the present invention in accordance with the context in which the term is used. For example, the software may be machine codes, firmware, embedded codes, and application software. As another example, the hardware may be circuitry, a processor, a computer, an integrated circuit, integrated circuit cores, a pressure sensor, an inertial sensor, a microelectromechanical system (MEMS), passive devices, or a combination thereof.

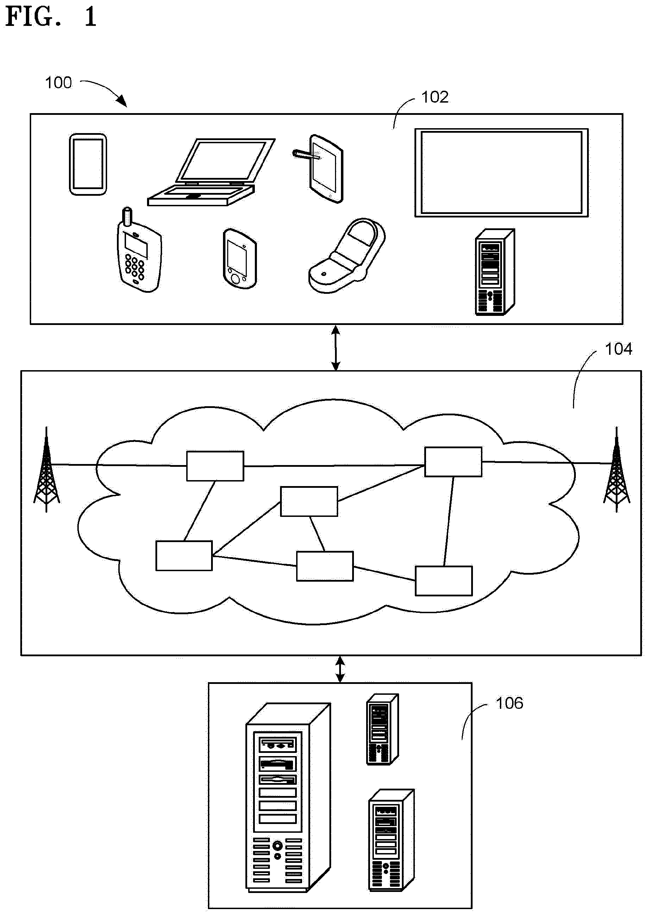

FIG. 1 is a device communication system 100 with a proximity synchronization mechanism, according to an embodiment of the present invention. The device communication system 100 includes a first device 102, such as a client, connected to a second device 106, such as a server. The first device 102 may communicate with the second device 106 through a communication path 104, such as a wireless or wired network. It is understood that several examples of the first device 102 may communicate with each other through a wireless networking aspect of the communication path 104.

For example, the first device 102 may be any one of a variety of devices, such as a cellular phone, a personal digital assistant (PDA), a notebook computer, a tablet computer, an intelligent TV, a smartphone, a game console, or other multi-functional communication or entertainment devices. The first device 102 may directly or indirectly couple to the communication path 104 to communicate with the second device 106 or may be a stand-alone device.

The second device 106 may be a server device configured as a variety of centralized or decentralized computing devices. For example, the second device 106 may be a central server, a multimedia computer, a laptop computer, a desktop computer, grid-computing resources, a virtualized computer resource, cloud computing resource, peer-to-peer distributed computing devices, or a combination thereof. As another example, the second device 106 may be a location server that monitors a location of all network capable versions of the first device 102 leveraging their geographical information derived from various state-of-the-art location services such as a Global Positioning System (GPS) or Global System for Mobile communications (GMS).

The second device 106 may be centralized in a single room, distributed across different rooms, distributed across different geographical locations, or embedded within a telecommunications network. The second device 106 may couple with the communication path 104 that communicates with the first device 102.

Although the second device 106 of the device communication system 100 may be different types of devices, the second device 106 is described as a computing device herein. Also, even though the device communication system 100 may have different partitions between the first device 102, the second device 106, and the communication path 104, for illustrative purposes, the device communication system 100 is shown with the second device 106 and the first device 102 as end points of the communication path 104. For example, the first device 102, the second device 106, or a combination thereof may also function as a part of the communication path 104.

The communication path 104 may span and represent a variety of networks and network topologies. For example, the communication path 104 may include wireless communication, wired communication, optical, ultrasonic, or a combination thereof. Satellite communication, cellular communication, Bluetooth, Infrared Data Association standard (IrDA), wireless fidelity (WiFi), and worldwide interoperability for microwave access (WiMAX) are examples of wireless communication that may be included in the communication path 104. Ethernet, digital subscriber line (DSL), fiber to the home (FTTH), and plain old telephone service (POTS) are examples of wired communication that may be included in the communication path 104. Furthermore, the communication path 104 may traverse one or more network topologies and distances. For example, the communication path 104 may include a personal area network (PAN), a local area network (LAN), a metropolitan area network (MAN), a wide area network (WAN), or a combination thereof.

FIG. 2 is an example of the device communication system 100, according to an embodiment of the present invention. The example of the device communication system 100 depicts a group of the first device 102 of FIG. 1 communicating with the second device 106 through the communication path 104. The group of the first device 102 can include a wireless enabled device 202, such as a laptop computer, tablet computer, network attached storage, or desktop computer, having a display screen 204, a wireless antenna 206, a left speaker 208, and a right speaker 210.

The first device 102 may also include a first mobile device 212 and a second mobile device 214. The first mobile device 212 may be a smartphone, a cellular phone, a PDA, or the like, which may send a proximate resource request 215 as the wireless enabled device 202. Likewise, the second mobile device 214 may be a smartphone, a cellular phone, a PDA, or the like, which may send a proximate resource request 215, such as the wireless enabled device 202.

For illustrative purposes, the first mobile device 212 and the second mobile device 214 are shown as two different devices. However, it is understood that the first mobile device 212 and the second mobile device 214 may both be the first device 102 as a single device but at their respective locations shown in FIG. 2. Also for illustrative purposes, the first mobile device 212 and the second mobile device 214 are described as mobile devices, the first mobile device 212, the second mobile device 214, or a combination thereof may be stationary but not necessarily mobile type devices.

The proximate resource request 215 from the first mobile device 212 and the second mobile device 214 may be received by the second device 106. As part of its function, the second device 106 may monitor locations of each of the first devices 102 that are network capable. Location information may be provided through GSM or GPS, within the first device 102, and provided to the second device 106.

The second device 106 may store all available resources to identify any of the first device 102 within a first radius 216 of the first mobile device 212. The first radius 216 may have a large initial radius because GPS does not work reliably indoors and granularity of GSM data is also not very high. The initial radius of the first radius 216 may be 100 meters. When the second device 106 identifies each of the first devices 102 that are capable of satisfying the proximate resource request 215 and are within the first radius 216, the first devices 102 are activated through a wireless activation command 217 from the second device 106, as wireless access points and become the wireless enabled devices 202.

The first mobile device 212 and the second mobile device 214 may detect each of the wireless enabled devices 202 within a second radius 218. The second radius 218 may be less than 30 meters. Corresponding wireless signal strengths for each of the wireless enabled device 202 within the second radius 218 may be saved on the first mobile device 212 and the second mobile device 214. The wireless signal strength of the wireless enabled device 202 does not decrease uniformly in all directions with an increase in distance. This phenomenon is very strong within a sub 3 meter range. That is, within the first 3 meters around the wireless enabled device 202, the signal strength decreases non-uniformly. Although most instances of the wireless enabled device 202 may have the wireless antenna 206, such as an omni-directional antenna, accompanying hardware of the wireless enabled device 202 usually means that the signal strength measured right next to a device and the signal strengths on left and right sides may be different. This depends on the placement of the wireless antenna 206 on the wireless enabled device 202.

A first wireless signal strength 220 received by the first mobile device 212 may be significantly weaker than a second wireless signal strength 222 received by the second mobile device 214 based on their individual distance from the wireless enabled device 202. The first wireless signal strength 220 may be attenuated by 10-15 dB more than the second wireless signal strength 222 due to the placement of the wireless antenna 206. The first wireless signal strength 220 and the second wireless signal strength 222 may be used to accurately calculate the distance when an acoustic direction 230 from the wireless enabled device 202 to the first mobile device 212 and the second mobile device 214 is known. Respective amplitudes of the first wireless signal strength 220 and the second wireless signal strength 222 decrease in proportional to the distance squared. By knowing a standard broadcast amplitude, the distance may be calculated by the first mobile device 212 and the second mobile device 214.

In order to discover the acoustic direction 230 from the wireless enabled device 202 to the first mobile device 212 and the second mobile device 214, the wireless enabled device 202 emits two human inaudible tones of different frequencies and equal amplitudes from both the left speaker 208 and the right speaker 210. For example, the left speaker 208 may emit a left acoustic signal 224 such as an 18 kHz sine wave, and the right speaker 210 may simultaneously emit a right acoustic signal 226 such as an 18.5 kHz sin wave. By comparing an amplitude of the left acoustic signal 224 and an amplitude of the right acoustic signal 226, the first mobile device 212 and the second mobile device 214 may determine the acoustic direction 230 to the wireless enabled device 202. Once the acoustic direction 230 to the wireless enabled device 202 is known, a proximity adjustment model may be selected to interpret the first wireless signal strength 220 or the second wireless signal strength 222 for determining the distance to the wireless enabled device 202.

In order to automatically establish a peer-to-peer network connection 232 though the first wireless signal strength 220, the device communication system 100 may accurately determine the distance and the acoustic direction 230 from the wireless enabled device 202 to the first mobile device 212 by combining interpretation of the amplitude of the first wireless signal strength 220 with an amplitude comparison of the left acoustic signal 224 and the right acoustic signal 226. The distance and the acoustic direction 230 may be used to make any interaction between the wireless enabled device 202 and the first mobile device 212 more intuitive. For example, when the first mobile device 212 is located at the left side of the wireless enabled device 202 as shown in FIG. 2, a selected file may be copied by a motion from a left side to a right side on a touch screen 213 of the first mobile device 212, toward the acoustic direction 230 of the wireless enabled device 202.

The same type of the peer-to-peer network connection 232 may be performed on the second mobile device 214 at the right side of the wireless enabled device 202 as shown in FIG. 2, a selected file may be copied by a motion on the touch screen 213 from the right side of the touch screen 213 to the left side of the touch screen 213, toward the acoustic direction 230 of the wireless enabled device 202. In addition, when no file is selected, the motion on the touch screen 213 of the second mobile device 214 from the right side of the touch screen 213 to the left side of the touch screen 213, toward the acoustic direction 230 of the wireless enabled device 202 may transfer control to the wireless enabled device 202. This may be useful in order to transfer a file from the wireless enabled device 202 to the second mobile device 214 or the first mobile device 212.

For example, when the wireless enabled device 202 has an application file 228 such as PowerPoint™, displayed on the display screen 204, a motion on the touch screen 213 of the second mobile device 214 from the left side of the touch screen 213 to the right side of the touch screen 213 may transfer the application file 228 from the wireless enabled device 202 to the second mobile device 214. Before actually transferring the application file 228, the wireless enabled device 202 may interrogate the second mobile device 214 to determine whether appropriate application software is resident on the second mobile device 214. When the second mobile device 214 does not have the appropriate application software, the wireless enabled device 202 may offer to convert a file to a more universal format for transfer to the second mobile device 214. The conversion option may be offered on the touch screen 213 of the second mobile device 214. When the application file 228 is intended to be displayed directly from the second mobile device 214, the conversion may be accepted and a converted file may be transferred from the wireless enabled device 202 to the second mobile device 214. However, when the application file 228 is to be transported by the second mobile device 214 to another device that does not have the appropriate application software, the conversion may be declined and the application file 228 may be transferred from the wireless enabled device 202 to the second mobile device 214 in its original format.

The device communication system 100 may automatically form the peer-to-peer network connection 232 by putting the first mobile device 212 within the second radius 218 of the wireless enabled device 202. Once the peer-to-peer network connection 232 is formed between the first mobile device 212 and the wireless enabled device 202, an application operating on the first mobile device 212 may be configured to automatically transfer the application file 228 from the first mobile device 212 to the wireless enabled device 202 in order to display on the display screen 204 as soon as the peer-to-peer network connection 232 is established. In this configuration, no intervention is required to move the application file 228 from the first mobile device 212 to the wireless enabled device 202. In addition, when the application file 228 is closed from the wireless enabled device 202, an updated copy of the application file 228 may be transferred back to the first mobile device 212 without intervention.

The device communication system 100 may provide a secure access mechanism for the wireless enabled device 202 that is electronically locked as in a sleep mode. The placing of the first mobile device 212 within the second radius 218 from the wireless enabled device 202 may provide any password necessary for unlocking the wireless enabled device 202 without any intervention. The peer-to-peer network connection 232 may pass an encrypted password key from the first mobile device 212 to the wireless enabled device 202 in order to automatically allow an operation of the wireless enabled device 202 to proceed.

Operations between the wireless enabled device 202 and the first mobile device 212 are examples for describing the present invention without limiting the present invention. All of the aforementioned operations of the first mobile device 212 may also apply to the second mobile device 214. In addition, any number of mobile devices and the wireless enabled device 202 may be simultaneously coupled to the peer-to-peer network connection 232.

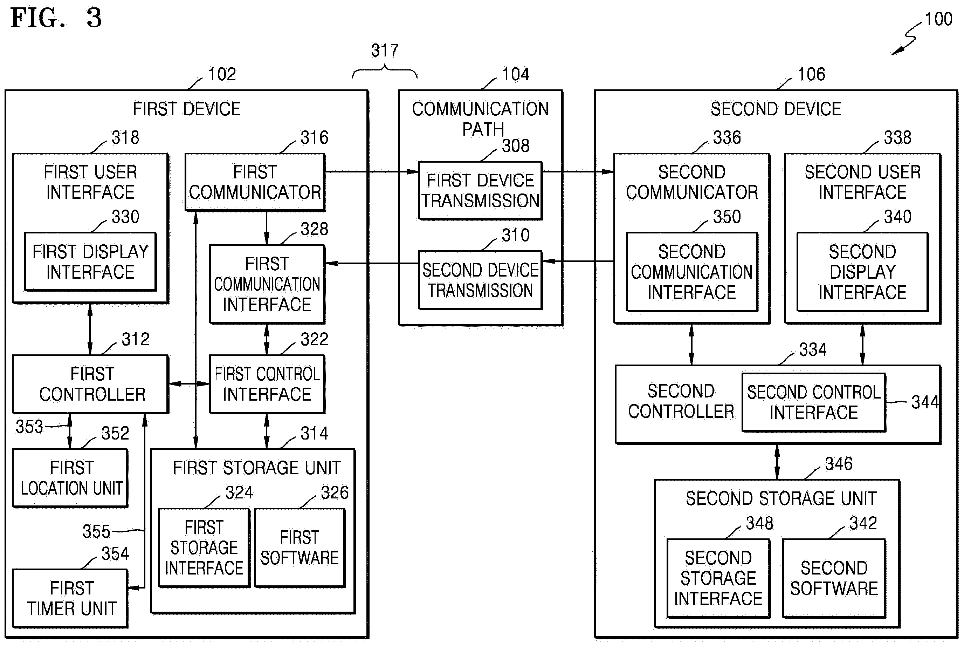

FIG. 3 is an exemplary block diagram of the device communication system 100. The device communication system 100 may include the first device 102, the communication path 104, and the second device 106. The first device 102 may send information to the second device 106 through a first device transmission 308 of the communication path 104. Likewise, the second device 106 may send information to the first device 102 through a second device transmission 310 of the communication path 104.

Although the device communication system 100 is shown with the first device 102 as a client device for illustrative purposes, the device communication system 100 may have the first device 102 as a different type of device. For example, the first device 102 may be a mobile server having a number of clients including a display interface for displaying relevant information.

Also, although the device communication system 100 is shown with the second device 106 as a server for illustrative purposes, the device communication system 100 may have the second device 106 as a different type of device. For example, the second device 106 may be a client device.

For brevity of description in this embodiment of the present invention, the first device 102 will be described as a client device and the second device 106 will be described as a server. However, the present invention is not limited to these types of devices. The present embodiment is merely an example of the present invention.

The first device 102 may include a first controller 312, a first storage unit 314, a first communicator 316, and a first user interface 318. The first controller 312 may communicate through a first control interface 322. The first controller 312 may execute first software 326 to provide a portion of intelligence of the device communication system 100.

The first controller 312 may be implemented in a number of different manners. For example, the first controller 312 may be a processor, an application specific integrated circuit (ASIC), an embedded processor, a microprocessor, hardware control logic, a hardware finite state machine (FSM), a digital signal processor (DSP), or a combination thereof. The first control interface 322 may be used for communication between the first controller 312 and other functional units in the first device 102. The first control interface 322 may be used for communication with external sources outside the first device 102.

The first control interface 322 may receive information from the other functional units or from the external sources, or may transmit information to the other functional units or to external destinations. The external sources and the external destinations refer to sources and destinations external to the first device 102. The first control interface 322 may be configured to receive the first wireless signal strength 220 of FIG. 2 through a first communication interface 328. The first control interface 322 may determine an amplitude reduction of the first wireless signal strength 220 from a standard transmission, in order to determine the distance from the first device 102 such as the first mobile device 212 of FIG. 2 to the wireless antenna 206 of the wireless enabled device 202 of FIG. 2.

The first control interface 322 may be implemented in different ways and may include different implementations depending on which functional units or external units are being interfaced with the first control interface 322. For example, the first control interface 322 may be implemented with a pressure sensor, an inertial sensor, an MEMS, optical circuitry, waveguides, wireless circuitry, wireline circuitry, or a combination thereof.

The first storage unit 314 may be volatile memory, non-volatile memory, internal memory, external memory, or a combination thereof. For example, the first storage unit 314 may be a non-volatile storage such as non-volatile random access memory (NVRAM), flash memory, and a disk storage, or a volatile storage such as static random access memory (SRAM).

The first storage unit 314 may include a first storage interface 324. The first storage interface 324 may be used for communication between other functional units in the first device 102. Also, the first storage interface 324 may be used for communication with units external to the first device 102, such as external memory, a solid-state drive (SSD), or an external hard disk drive (HDD).

The first storage interface 324 may receive information from the other functional units or from external sources, or may transmit information to the other functional units or to external destinations. The external sources and the external destinations refer to sources and destinations external to the first device 102 or temporarily housed within the first device 102 and removed.

The first storage interface 324 may include different implementations depending on which functional units or external units are being interfaced with the first storage unit 314. The first storage interface 324 may be implemented with technologies and techniques similar to the implementation of the first control interface 322.

The first communicator 316 may also enable external communication to and from the first device 102. For example, the first communicator 316 may permit the first device 102 to communicate with the second device 106 of FIG. 1, an attachment such as a peripheral device or a computer desktop, and the communication path 104.

The first communicator 316 may also function as a communication hub allowing the first device 102 to function as part of the communication path 104 and not limited to be an end point or a terminal unit to the communication path 104. The first communicator 316 may include active and passive components such as microelectronics or an antenna in order to interact with the communication path 104 and a wireless channel 317.

The first communicator 316 may control the first communication interface 328. The first communication interface 328 may be used for communication between the first communicator 316 and other functional units in the first device 102. The first communication interface 328 may receive information from other functional units or transmit information to the other functional units.

The communication interface 328 may include different implementations depending on which functional units or external devices are being interfaced with the first communicator 316. The first communication interface 328 may be implemented with technologies and techniques similar to the implementation of the first control interface 322.

The first user interface 318 may allow a user to interface and interact with the first device 102. The first user interface 318 may include an input device and an output device. Examples of the input device of the first user interface 318 may include a keypad, a touchpad, soft-keys, a keyboard, a microphone, an infrared sensor for receiving remote signals, or any combination thereof to provide data and communication inputs.

The first user interface 318 may include a first display interface 330. The first display interface 330 may include a display, a projector, a touch screen, a video screen, a speaker, or a combination thereof.

The first controller 312 may operate the first user interface 318 to display information generated by the device communication system 100. The first controller 312 may also execute the first software 326 for other functions of the device communication system 100. The first controller 312 may execute the first software 326 to interact with the communication path 104 via the first communicator 316 and the wireless channel 317.

The second device 106 may be optimized for implementing an embodiment of the present invention in a multiple device embodiment with the first device 102. The second device 106 may provide additional or higher performance processing power compared to the first device 102. The second device 106 may converge relevant information for several of the first devices 102 in order to provide groups of targeted users of the first device 102 that share common categories of the relevant information. The second device 106 may monitor geophysical locations of several of the first device 102 in order to identify proximate resources in a range of any of the first devices 102. The second device 106 may include a second controller 334, a second communicator 336, and a second user interface 338.

The second user interface 338 allows a user to interface and interact with the second device 106. The second user interface 338 may include an input device and an output device. Examples of the input device of the second user interface 338 may include a keypad, a touchpad, soft-keys, a keyboard, a microphone, or any combination thereof to provide data and communication inputs. Examples of the output device of the second user interface 338 may include a second display interface 340. The second display interface 340 may include a display, a projector, a video screen, a speaker, or any combination thereof.

The second controller 334 may execute second software 342 to provide intelligence of the second device 106 of the device communication system 100. The second software 342 may operate in conjunction with the first software 326 to operate modules of the device communication system 100. The second controller 334 may provide additional performance compared to the first controller 312.

The second controller 334 may operate the second user interface 338 to display information. The second controller 334 may also execute the second software 342 for other functions of the device communication system 100, including operating the second communicator 336 to communicate with the first device 102 through the communication path 104.

The second controller 334 may be implemented in a number of different manners. For example, the second controller 334 may be a processor, an embedded processor, a microprocessor, hardware control logic, an FSM, a DSP, or a combination thereof.

The second controller 334 may include a second control interface 344. The second control interface 344 may be used for communication between the second controller 334 and other functional units in the second device 106. The second control interface 344 may be used for communication with units external to the second device 106.

The second control interface 344 may receive information from the other functional units or external sources, or transmit information to the other functional units or to external destinations. The external sources and the external destinations refer to sources and destinations external to the second device 106.

The second control interface 344 may be implemented in different ways and may include different implementations depending on which functional units or external units are being interfaced with the second controller interface 344. For example, the second controller interface 344 can be implemented with a pressure sensor, an inertial sensor, an MEMS, optical circuitry, waveguides, wireless circuitry, wireline circuitry, or a combination thereof.

A second storage unit 346 may store the second software 342. The second storage unit 346 may also store information such as data representing incoming images, data representing previously presented images, sound files, or a combination thereof. The second storage unit 346 may be sized to provide additional storage capacity to supplement the first storage unit 314. The second storage unit 346 may also receive input from other sources for delivery to the first device 102 through the communication path 104.

Although the second storage unit 346 is shown as a single element for illustrative purposes, the second storage unit 346 may be two or more elements distributed in various locations. Also, although the device communication system 100 is shown with the second storage unit 346 as a single hierarchy storage system for illustrative purposes, the second storage unit 346 may have a different configuration. For example, the second storage unit 346 may be formed with different storage technologies for forming a memory hierarchical system such as cache memory, main memory, rotating media, or an offline storage device.

The second storage unit 346 may be volatile memory, non-volatile memory, internal memory, external memory, or a combination thereof. For example, the second storage unit 346 may be a non-volatile storage such as NVRAM, flash memory, and a disk storage, or a volatile storage such as SRAM.

The second storage unit 346 may include a second storage interface 348. The second storage interface 348 may be used for communication between other functional units in the second device 106. The second storage interface 348 may also be used for communication with units external to the second device 106.

The second storage interface 348 may receive information from the other functional units or external sources, or transmit information to the other functional units or external destinations. The external sources and the external destinations refer to sources and destinations external to the second device 106.

The second storage interface 348 may include different implementations depending on which functional units or external units are being interfaced with the second storage unit 346. The second storage interface 348 can be implemented with technologies and techniques similar to the implementation of the second controller interface 344.

The second communicator 336 may enable the second device 106 to communicate with external units. For example, the second communicator 336 may allow the second device 106 to communicate with the first device 102 via the communication path 104.

The second communicator 336 may also function as a communication hub allowing the second device 106 to function as part of the communication path 104 and not limited to be an end point or terminal unit to the communication path 104. The second communication unit 336 may include active and passive components such as microelectronics or an antenna in order to interact with the communication path 104.

The second communicator 336 may include a second communication interface 350. The second communication interface 350 may be used for communication between the second communicator 336 and the other functional units in the second device 106. The second communication interface 350 may receive or transmit information from or to the other functional units.

The second communication interface 350 may include different implementations depending on which functional units are being interfaced with the second communicator 336. The second communication interface 350 may be implemented with technologies and techniques similar to the implementation of the second control interface 344.

A first location unit 352 may determine a device location 353 of the first device 102 by communicating with a global positioning satellite. The device location 353 maybe passed to the first controller 312 for displaying on the first user interface 318 to present routing and destination information for the first device 102. The device location 353 may also be sent from the first controller 312 through the first communication interface 316 and the first device transmission 308 to the second device 106 in order to report location information of the first device 102. The reporting of the device location 353 of the first device 102 may be used to facilitate the forming of the peer-to-peer network connection 232 of FIG. 2. The first device 102 may report the device location 353 periodically or when requested by the second device 106 as the configuration of the device communication system 100 requires.

A first timer module 354 may be coupled to the first controller 312. The first timer module 354 may be used to monitor durations of time between events of interest to the first controller 312. The first timer module 354 may be scaled to measure time intervals from seconds to months, and may be simultaneously used in multiple processes. The first timer module 354 may measure the time or may be used to verify an extended period of time, such as days, weeks, or months, for requesting periodic updates. The first timer module 354 may provide a time indicator 355, such as a time stamp or a system clock, so that the first controller 312 is associated with the events of interest.

The modules of the first device 102 may be combined to operate as client modules of the first device 102. For example, a client navigation module may be operate by combining the first controller 312, the first location unit 352, the first storage unit 314, and the first user interface 318. A client entertainment module may operate by combining the first controller 312, the first storage unit 314, and the first user interface 318. A client safety module may operate by combining the first controller 312, the first communication interface 328, the first storage unit 314, and the first control interface 322, which is in control of switches and sensors throughout the first device 102.

The first communicator 316 may be coupled to the communication path 104 through the wireless channel 317 to send information to the second device 106 in the first device transmission 308. The second device 106 may receive information in the second communicator 336 from the first device transmission 308 of the communication path 104.

The second communicator 336 may be coupled to the communication path 104 to send information to the first device 102 through the second device transmission 310. The first device 102 may receive information in the first communicator 316 from the second device transmission 310 of the communication path 104. The device communication system 100 may operated by the first controller 312, the second controller 334, or a combination thereof. For illustrative purposes, the second device 106 is divided into four partitions, i.e., the second user interface 338, the second storage unit 346, the second controller 334, and the second communicator 336. For example, the second software 342 may be partitioned differently such that some or all of its functions are in the second controller 334 and the second communicator 336. Also, the second device 106 may include other functional units not shown in FIG. 3.

The functional units of the first device 102 may operate individually and independently from the other functional units. The first device 102 may operate individually and independently from the second device 106 and the communication path 104.

The functional units of the second device 106 may operate individually and independently from the other functional units. The second device 106 may operate individually and independently from the first device 102 and the communication path 104.

For illustrative purposes, the device communication system 100 is described by operations of the first device 102 and the second device 106. The first device 102 or the second device 106 may operate any of the modules and functions of the device communication system 100.

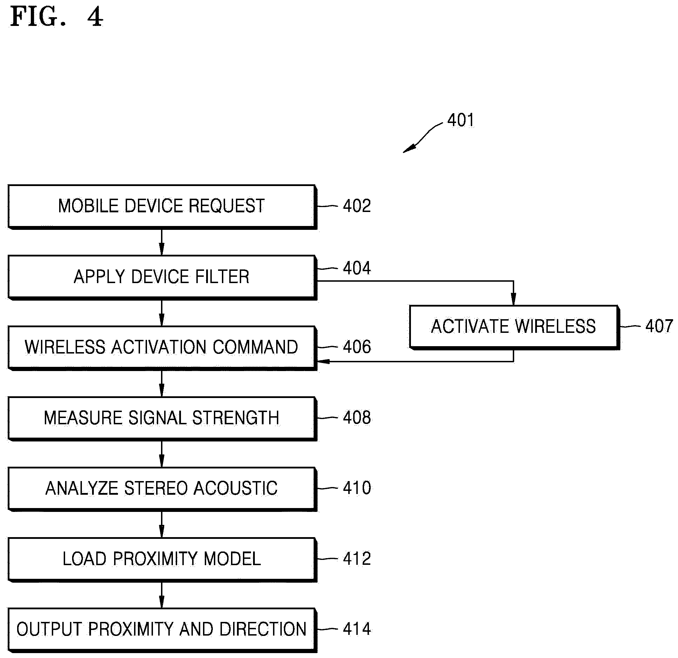

FIG. 4 is a control flow 401 of the device communication system 100 of FIG. 1. The control flow 401 of the device communication system 100 shows that a mobile device request module 402, which includes the first mobile device 212 of FIG. 2, requests access to overlap resources within the second radius 218 of FIG. 2 to form the peer-to-peer network connection 232.

The flow then proceeds to a device filter apply module 404, in which each of the first devices 102 of FIG. 1 within the first radius 216 of the first mobile device 212 may be identified. The flow then proceeds to a wireless activate module 406, in which a wireless activation command 407 is sent to each of the first devices 102 within the first radius 216 by the second device 106 of FIG. 1, and the wireless activate module 406 instructs the first device 102 to operate as a wireless access point. The first device 102 may operate as a wireless access point by transmitting the wireless signal strength 220 of FIG. 2, the left acoustic signal 224 of FIG. 2, and the right acoustic signal 226 of FIG. 2. When the first device 102 functions as the wireless access point, the first device 102 becomes the wireless enabled device 202 of FIG. 2.

The flow then proceeds to a signal strength measure module 408. The signal strength measure module 408 provides the maximum value of the wireless signal strength 220 measured at the first mobile device 212 to identify the wireless enabled device 202 that is proximate.

The flow then proceeds to a stereo acoustic analysis module 410. The stereo acoustic analysis module 410 provides two human inaudible tones of different frequencies and equal amplitudes from both the left speaker 208 and the right speaker 210. For example, the left speaker 208 may emit the left acoustic signal 224, such as an 18 kHz sine wave, and the right speaker 210 may emit the right acoustic signal 226, such as an 18.5 kHz sine wave. By comparing an amplitude of the left acoustic signal 224 and an amplitude of the right acoustic signal 226, the first mobile device 212 may determine the acoustic direction 230 to the wireless enabled device 202.

The flow then proceeds to a load proximity model module 412, in which the acoustic direction 230 from the first mobile device 212 to the wireless enabled device 202 may be used to select an appropriate adjustment model for adjusting the wireless signal strength measured at the first mobile device 212. The correction to the amplitude of the wireless signal strength measured at the first mobile device 212 may provide an accurate measurement of a proximate distance between the first mobile device 212 and the wireless enabled device 202.

The flow then proceeds to an output proximity and direction module 414, in which the first mobile device 212 may utilize a distance calculated from the first wireless signal strength 220 and the acoustic direction 230 to the wireless enabled device 202 so as to form the peer-to-peer network connection 232.

The peer-to-peer network connection 232 of the device communication system 100 may be automatically formed by placing the first mobile device 212 within the second radius 218 of the wireless enabled device 202. Once the peer-to-peer network connection 232 is formed between the first mobile device 212 and the wireless enabled device 202, an application operating on the first mobile device 212 may be configured to automatically transfer the application file 228 from the first mobile device 212 to the wireless enabled, for displaying on the display screen 204. In this configuration, no intervention is required to move the application file 228 from the first mobile device 212 to the wireless enabled device 202. Furthermore, when the application file 228 is closed from the wireless enabled device 202, an updated copy of the application file 228 may be transferred back to the first mobile device 212 without intervention.

When the peer-to-peer network connection 232 is formed, the application file 228 may be transferred between the first mobile device 212 and the wireless enabled device 202 in either direction. That is, the first mobile device 212 may also retrieve the application file 228 from the wireless enabled device 202. The direction of transfer may be controlled by the first mobile device 212. In order to pull the application file 228 from the wireless enabled device 202, the application file 228 has to be displayed on the display interface 330 of the wireless enabled device 202 of FIG. 3 prior to transfer.

The modules described herein may be hardware implementation or hardware accelerators in the first controller 316 of FIG. 3 or the second controller 334 of FIG. 3. Also, the modules may be within the first device 102 or the second device 106, but outside the first controller 316 of FIG. 3 or the second controller 334 of FIG. 3. However, it is understood that the first controller 316, the second controller 334, or a combination thereof may collectively refer to all hardware accelerators for the modules.

The modules described in this application may be implemented as instructions stored on a non-transitory computer-readable recording medium to be executed by the first controller 312, the second controller 334, or a combination thereof. The non-transitory computer-readable recording medium may include the first storage unit 314 of FIG. 3, the second storage unit 346 of FIG. 3, or a combination thereof. The non-transitory computer-readable recording medium may include non-volatile memory, for example, HDD, NVRAM, SSD, Compact Disc (CD), digital video disc (DVD), or universal serial bus (USB) flash memory devices. The non-transitory computer-readable recording medium may be integrated as a part of the device communication system 100 or installed as a removable portion of the device communication system 100.

Physical transformation from the application file 228 of FIG. 2 in the first mobile device 212 may automatically be transferred to the wireless enabled device 202 without intervention, which causes movement in the physical world, such as displaying the application file 228 on the display screen 204 of the wireless enabled device 202. The movement in the physical world causes changes by restoring the application file 228 executed in the wireless enabled device 202 to the first mobile device 212 without intervention of the user of the wireless enabled device 202.

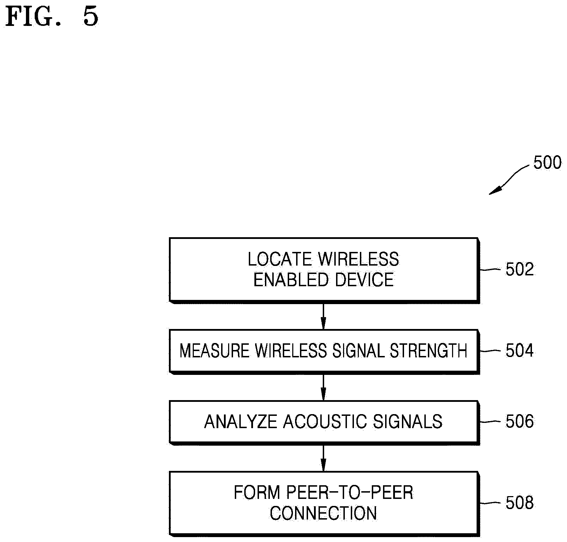

FIG. 5 is a flowchart of a method 500 of operating the device communication system 100 according to an embodiment of the present invention. The method 500 includes: contacting a server device for locating a wireless enabled device in operation 502; measuring a wireless signal strength in operation 504; analyzing a left acoustic signal and a right acoustic signal and determining an acoustic direction of the wireless enabled device in operation 506; and forming a peer-to-peer network connection based on the wireless signal strength and the acoustic direction in operation 508.

The methods, processes, apparatuses, devices, products, and/or system according to the present invention are/is simple, cost-effective, not complicated, highly versatile, accurate, sensitive, and effective, and may be implemented by adapting known components for efficient and economical manufacturing, application, and utilization. Another important aspect of an embodiment of the present invention is that the embodiment valuably supports and services the historical trend of reducing costs, simplifying systems, and increasing performance.

These and other valuable aspects of an embodiment of the present invention may consequently improve at least the level of the current technology.

While the present invention has been described in conjunction with a specific best embodiment, it is to be understood that many alternatives, modifications, and variations will be apparent to one of ordinary skill in the art based on the aforementioned descriptions. Accordingly, it is intended to embrace all such alternatives, modifications, and variations that fall within the scope of the claims. All matters set forth herein or shown in the accompanying drawings are to be implemented in an illustrative and non-limiting sense.

## Claims

1. A mobile device (213, 214) for use in a device communication system (100) comprising:
a communication interface (328) configured to transmit and receive wireless signals;
a control interface (322) coupled to the communication interface (328) and configured:
to control the communication interface (328) to send a proximate resource request to a server device (106) to trigger the transmission of a wireless activation command from the server device (106) to the wireless enabled device (202); and
to measure the wireless signal strength of a wireless signal provided by the wireless enabled device (202);
a user interface coupled to the control interface (322) and configured to analyze a left acoustic signal (224) and a right acoustic signal (226) provided by the wireless enabled device (202), to determine an acoustic direction of the wireless enabled device (202); and
a controller (312) coupled to the user interface and configured to form a peer-to-peer network connection based on the wireless signal strength and the acoustic direction.

2. The mobile device of claim 1, further comprising a storage unit coupled to the controller (312) and configured to store an application file (228) and transfer the application file (228) to the wireless enabled device (202).

3. The mobile device of claim 1, wherein the communication interface (328) is configured to transfer an application file (228) through the peer-to-peer network connection.

4. The mobile device of claim 1, further comprising a communicator coupled to the peer-to-peer network connection and configured to transfer an application file (228) to the wireless enabled device (202).

5. The mobile device of claim 1, further comprising a first location unit configured to provide a device location and coupled to the controller (312) to transfer the device location.

6. The mobile device of claim 1, further comprising a communicator configured to automatically transfer an application file (228) when the peer-to-peer network connection is formed.

7. The mobile device of claim 1, wherein the user interface comprises a touch screen configured to control transfer of an application file (228) through the peer-to-peer network connection.

8. A method performed by a mobile device (213, 214) in a device communication system (100), the method comprising:
sending a proximate resource request to a server device (106) to trigger the transmission of a wireless activation command from the server device (106) to a wireless enabled device (202);
measuring a wireless signal strength of a wireless signal provided by the wireless enabled device (202);
analyzing a left acoustic signal (224) and a right acoustic signal (226) from the wireless enabled device (202) to determine an acoustic direction of the wireless enabled device (202); and
forming a peer-to-peer network connection based on the wireless signal strength and the acoustic direction.

9. The method of claim 8, further comprising transferring an application file (228) to the wireless enabled device (202) through the peer-to-peer network connection.

10. The method of claim 8, wherein the forming of the peer-to-peer network connection comprises displaying an application transferred through the peer-to-peer network connection on a display screen.

## Patentansprüche

1. Mobilvorrichtung (213, 214) zur Verwendung in einem Vorrichtungskommunikationssystem (100), aufweisend:
eine Kommunikationsschnittstelle (328), die konfiguriert ist, um drahtlose Signale zu übertragen und zu empfangen; eine Steuerungsschnittstelle (322), die mit der Kommunikationsschnittstelle (328) verbunden und konfiguriert ist: zum Steuern der Kommunikationsschnittstelle (328), um eine unmittelbare Ressourcenanforderung an eine Servervorrichtung (106) zu senden, um die Übertragung eines drahtlosen Aktivierungsbefehls von der Servervorrichtung (106) zu einer Vorrichtung mit Wireless-Funktionalität (202) auszulösen; und
zum Messen der Funksignalstärke eines drahtlosen Signals, das durch die Vorrichtung mit Wireless-Funktionalität (202) bereitgestellt wird;
eine Benutzerschnittstelle, die mit der Steuerungsschnittstelle (322) verbunden und konfiguriert ist, um ein linkes akustisches Signal (224) und ein rechtes akustisches Signal (226) zu analysieren, die von der Vorrichtung mit Wireless-Funktionalität (202) bereitgestellt werden, um eine akustische Richtung der Vorrichtung mit Wireless-Funktionalität (202) zu bestimmen; und
einen Controller (312), der mit der Benutzerschnittstelle verbunden und konfiguriert ist, um eine Peer-to-Peer-Netzwerkverbindung auf Grundlage der Funksignalstärke und der akustischen Richtung auszubilden.

2. Mobilvorrichtung nach Anspruch 1, ferner aufweisend eine Speichereinheit, die mit dem Controller (312) verbunden und konfiguriert ist, um eine Anwendungsdatei (228) zu speichern und die Anwendungsdatei (228) zu der Vorrichtung mit Wireless-Funktionalität (202) zu übertragen.

3. Mobilvorrichtung nach Anspruch 1, wobei die Kommunikationsschnittstelle (328) konfiguriert ist, um eine Anwendungsdatei (228) über die Peer-to-Peer-Netzwerkverbindung zu übertragen.

4. Mobilvorrichtung nach Anspruch 1, ferner aufweisend einen Kommunikator, der mit der Peer-to-Peer-Netzwerkverbindung verbunden und konfiguriert ist, um eine Anwendungsdatei (228) zu der Vorrichtung mit Wireless-Funktionalität (202) zu übertragen.

5. Mobilvorrichtung nach Anspruch 1, ferner aufweisend eine erste Ortungseinheit, die konfiguriert ist, um einen Vorrichtungsstandort bereitzustellen, und mit dem Controller (312) verbunden ist, um den Vorrichtungsstandort zu übertragen.

6. Mobilvorrichtung nach Anspruch 1, ferner aufweisend einen Kommunikator, der konfiguriert ist, um eine Anwendungsdatei (228) automatisch zu übertragen, wenn die Peer-to-Peer-Netzwerkverbindung ausgebildet ist.

7. Mobilvorrichtung nach Anspruch 1, wobei die Benutzerschnittstelle einen Berührungsbildschirm aufweist, der konfiguriert ist, um eine Übertragung einer Anwendungsdatei (228) über die Peer-to-Peer-Netzwerkverbindung zu steuern.

8. Verfahren, ausgeführt von einer Mobilvorrichtung (213, 214) in einem Vorrichtungskommunikationssystem (100), wobei das Verfahren aufweist:
ein Senden einer unmittelbaren Ressourcenanforderung an eine Servervorrichtung (106), um die Übertragung eines drahtlosen Aktivierungsbefehls von der Servervorrichtung (106) zu einer Vorrichtung mit Wireless-Funktionalität (202) auszulösen;
ein Messen einer Funksignalstärke eines drahtlosen Signals, das durch die Vorrichtung mit Wireless-Funktionalität (202) bereitgestellt wird;
ein Analysieren eines linken akustischen Signals (224) und eines rechten akustischen Signals (226) von der Vorrichtung mit Wireless-Funktionalität (202), um eine akustische Richtung der Vorrichtung mit Wireless-Funktionalität (202) zu bestimmen; und
ein Ausbilden einer Peer-to-Peer-Netzwerkverbindung auf Grundlage der Funksignalstärke und der akustischen Richtung.

9. Verfahren nach Anspruch 8, ferner aufweisend ein Übertragen einer Anwendungsdatei (228) zu der Vorrichtung mit Wireless-Funktionalität (202) über die Peer-to-Peer-Netzwerkverbindung.

10. Verfahren nach Anspruch 8, wobei das Ausbilden der Peer-to-Peer-Netzwerkverbindung ein Anzeigen einer Anwendung, die über die Peer-to-Peer-Netzwerkverbindung übertragen wird, auf einem Anzeigebildschirm aufweist.

## Revendications

1. Dispositif mobile (213, 214) pour utilisation dans un système de communication d'appareil (100) comprenant :
une interface de communication (328) configurée pour transmettre et recevoir des signaux sans fil;
une interface de commande (322) couplée à l'interface de communication (328) et configurée :
pour commander l'interface de communication (328) afin d'envoyer une demande de ressources proches à un dispositif serveur (106) pour déclencher la transmission d'une commande d'activation sans fil du dispositif serveur (106) à l'appareil activé sans fil (202) ; et
pour mesurer l'intensité de signal sans fil d'un signal sans fil délivré par l'appareil activé sans fil (202) ;
une interface utilisateur couplée à l'interface de commande (322) et configurée pour analyser un signal acoustique gauche (224) et un signal acoustique droit (226) délivrés par l'appareil activé sans fil (202), pour déterminer la direction du son de l'appareil activé sans fil (202) ; et
une unité de commande (312) couplée à l'interface utilisateur et configurée pour former une connexion de réseau poste à poste sur la base de l'intensité du signal sans fil et de la direction du son.

2. Dispositif mobile selon la revendication 1, comprenant en outre une unité de stockage couplée à l'unité de commande (312) et configurée pour stocker un fichier d'application (228) et transférer le fichier d'application (228) à l'appareil activé sans fil (202).

3. Dispositif mobile selon la revendication 1, ladite interface de communication (328) étant configurée pour transférer un fichier d'application (228) par l'intermédiaire de la connexion de réseau poste à poste.

4. Dispositif mobile selon la revendication 1, comprenant en outre un communicateur couplé à la connexion de réseau poste à poste et configuré pour transférer un fichier d'application (228) à l'appareil activé sans fil (202).

5. Dispositif mobile selon la revendication 1, comprenant en outre une première unité de localisation configurée pour fournir un emplacement d'appareil et couplée à l'unité de commande (312) pour transférer l'emplacement d'appareil.

6. Dispositif mobile selon la revendication 1, comprenant en outre un communicateur configuré pour transférer automatiquement un fichier d'application (228) lorsque la connexion de réseau poste à poste est formée.

7. Dispositif mobile selon la revendication 1, ladite interface utilisateur comprenant un écran tactile configuré pour commander le transfert d'un fichier d'application (228) par l'intermédiaire de la connexion de réseau poste à poste.

8. Procédé exécuté par un dispositif mobile (213, 214) dans un système de communication d'appareil (100), le procédé comprenant :
l'envoi d'une demande de ressources proches à un dispositif serveur (106) pour déclencher la transmission d'une commande d'activation sans fil du dispositif serveur (106) à un appareil activé sans fil (202) ;
la mesure d'une intensité de signal sans fil d'un signal sans fil délivré par l'appareil activé sans fil (202) ;
l'analyse d'un signal acoustique gauche (224) et d'un signal acoustique droit (226) provenant de l'appareil activé sans fil (202) pour déterminer la direction du son de l'appareil activé sans fil (202) ; et
la formation d'une connexion de réseau poste à poste sur la base de l'intensité du signal sans fil et de la direction du son.

9. Procédé selon la revendication 8, comprenant en outre le transfert d'un fichier d'application (228) à l'appareil activé sans fil (202) par l'intermédiaire de la connexion de réseau poste à poste.

10. Procédé selon la revendication 8, ladite formation de la connexion de réseau poste à poste comprenant l'affichage d'une application transférée par l'intermédiaire de la connexion de réseau poste à poste sur un écran d'affichage.
